**Europäisches Patentamt**

**European Patent Office**

**Office européen des brevets**

(19)

(11) Veröffentlichungsnummer: **0 412 287 A2**

(12) # EUROPÄISCHE PATENTANMELDUNG

(21) Anmeldenummer: **90112574.0**

(22) Anmeldetag: **02.07.90**

(51) Int. Cl.⁵: **E21C 35/18**

(30) Priorität: **11.08.89 DE 3926627**

(43) Veröffentlichungstag der Anmeldung:
**13.02.91 Patentblatt 91/07**

(84) Benannte Vertragsstaaten:
**AT BE CH DK ES FR GB IT LI NL SE**

(71) Anmelder: **VERSCHLEISS-TECHNIK DR.-ING.
HANS WAHL GMBH & CO.
Brunnwiesenstrasse 5
D-7302 Ostfildern 1(DE)**

(72) Erfinder: **Wahl, Wolfgang
Schwarzwaldstrasse 10
D-7302 Ostfildern 1(DE)**

(74) Vertreter: **Ostertag, Ulrich et al
Patentanwälte Dr. Ulrich Ostertag Dr.
Reinhard Ostertag Eibenweg 10
D-7000 Stuttgart 70(DE)**

(54) **Meissel oder ähnliches Werkzeug für die Rohstoffgewinnung oder das Recycling.**

(57) Ein Meißel, der insbesondere für die Rohstoffgewinnung oder das Recycling eingesetzt wird, besitzt einen Grundkörper (2) aus mittellegiertem Stahl. In einer axialen Sackbohrung (6) des Grundkörpers (2) ist ein gesinterter Hartmetallstift (7) eingelötet. Die im Gebrauch freiliegende Oberfläche des Grundkörpers (2) ist im Wege des Plasma-Pulver-Auftragschweißverfahrens mit einer Verschleißschutzschicht (8) überzogen, deren Ausgangsmaterial die ungefähre Zusammensetzung 4,0 bis 8,0 % Kohlenstoff, 5,0 bis 40 % Chrom, 1,0 bis 30 % Vanadium, Nickel und/oder Wolfram, 0,1 bis 8,0 % Bor, Silizium, Mangan und/oder Nickel (Rest übliche Bestandteile) aufweist. Der zugehörige Meißelhalter (9) kann aus demselben, mittellegierten Stahl bestehen, der eine in derselben Weise aufgebrachte Verschleißschutzschicht (11) der o.g. Zusammensetzung besitzt.

# MEISSEL ODER ÄHNLICHES WERKZEUG FÜR DIE ROHSTOFFGEWINNUNG ODER DAS RECYCLING

Die Erfindung betrifft einen Meißel oder ein ähnliches Werkzeug für die Rohstoffgewinnung oder das Recycling mit einem Grundkörper aus mittellegiertem Stahl der ungefähren Zusammensetzung
0,1 bis 0,8 % Kohlenstoff
0,1 bis 10,0 % Chrom
0,1 bis 5,0 % Mangan, Vanadin, Wolfram, Silizium
(Rest übliche Eisenbegleiter wie Schwefel und Phosphor)
mit einer Verschleißschutzschicht aus verhältnismäßig hochlegiertem, hartem Material, mit einem Hartmetallstift aus gesintertem Wolfram- und/oder Tantalkarbid, der in einer Aufnahmeöffnung des Grundkörpers befestigt ist.

An Meißeln oder Meißelhaltern, wie sie beim Gewinnen von Kohle, Salz und anderen Materialien sowie beim Recycling insbesondere abgenutzter Asphaltbeläge eingesetzt werden, tritt ein besonderes Verschleißproblem auf. Diese Werkzeuge sind sowohl hochmechanisch als auch gegen Abrieb sehr stark beansprucht. Hier kommt es daher besonders auf eine optimale Werkstoffauswahl an.

Ein besonderes Problem ergibt sich in der Praxis dadurch, daß sich die unterhalb des Hartmetallstiftes befindliche Masse des Grundkörpers rasch abnutzt. So kommt es zum Herausbrechen des wesentlich spröderen, verschleißfesten Hartmetallstiftes. In ertremen Fällen kann dies bereits nach wenigen Stunden passieren. Dieses Verschleißproblem hat in jüngster Zeit sehr an Bedeutung gewonnen, da durch unterschiedliche Maßnahmen wesentliche Verlängerungen der Standzeiten der Hartmetallstifte erreicht wurden. Hierdurch kommt der Verlängerung der Lebensdauer des Grundkörpers eine noch größere Bedeutung als in der Vergangenheit zu.

Bekannte Meißel der eingangs genannten Art wurden daher durch eine Verschleißschutzschicht geschützt, die über den frei liegenden Bereichen des Grundkörpers durch Flammspritzen von NiCrBSi-Legierungen in einer Stärke zwischen 0,5 und 1,0 mm aufgebracht wurde. Die dabei eingesetzten Nickelbasiswerkstoffe sind aber gegen Abrasivverschleiß nicht sonderlich widerstandsfähig.

Es wurde auch bereits versucht, Meißel der eingangs genannten Art dadurch zu schützen, daß auf den Grundkörper durch Einsatz von Fülldraht-Auftragsschweißverfahren eine entsprechende Verschleißschutzschicht aufgebracht wurde. Hier findet jedoch eine erhebliche Vermischung mit dem Werkstoff des Grundkörpers des Meißels statt, so daß ebenfalls keine ausreichende Lebensdauerverlängerung des Grundkörpers erzielt wurde, um die vollen Standzeiten des Hartmetallstiftes ausnützen zu können.

Aufgabe der vorliegenden Erfindung ist es, einen Meißel der eingangs genannten Art derart auszugestalten, daß für den Grundkörper, insbesondere in dem dem Hartstoffstift benachbarten Bereich, eine erheblich größere Standzeit erreichbar ist.

Diese Aufgabe wird erfindungsgemäß dadurch gelöst, daß die Verschleißschutzschicht eine im Wege des Plasma-Pulver-Auftragsschweißverfahrens aus einem Werkstoff der ungefähren folgenden Zusammensetzung
4,0 bis 8,0 % Kohlenstoff
5,0 bis 40,0 % Chrom
1,0 bis 30,0 % Vanadin, Niob und/oder Wolfram
0,1 bis 8,0 % Bor, Silizium, Mangan und/oder Nickel
(Rest übliche Bestandteile)
aufgebrachte Schicht ist. Das Plasma-Pulver-Auftragsschweiß-verfahren ist als solches bekannt und braucht hier nicht näher erläutert zu werden. Es wird im wesentlichen in der Automobilindustrie zur Behandlung der Oberflächen von Ventilen eingesetzt. Die Erfindung beruht auf der Erkenntnis, daß dieses aus einem anderen technischen Gebiet bekannte Verfahren in besonders guter Weise bei gattungsgemäßen Meißeln zur Erzielung hoher Grundkörper-Standzeiten einsetzbar ist. Diese gute Eignung beruht u.a. auf der verhältnismäßig geringen Wärmeeinbringung, die zudem gut (auch räumlich) steuerbar ist, sowie auf der Verwendbarkeit von Materialien, die auf andere Weise nicht ohne weiteres aufgebracht werden können und erheblich bessere Verschleißeigenschaften aufweisen. Durch die geringe Vermischung mit dem Material des Grundkörpers, die wiederum eine Folge der gut steuerbaren Wärmeeinbringung ist, können bereits bei verhältnismäßig geringen Schichtdicken übereutektische Zusammensetzungen unter Ausbildung von Primärkarbiden erreicht werden.

Die Verschleißschutzschicht sollte eine Dicke zwischen 3 und 5 mm besitzen. Dann ist normalerweise bei den vorgeschlagenen Materialien der Verschleißschutzschicht sowie den derzeit bekannten Materialien des Hartmetallstiftes gewährleistet, daß die Standzeit des Hartmetallstiftes nicht durch Verschleiß des Grundkörpers beeinträchtigt wird.

Erfindungsgemäß kann zudem auch der Meißelhalter, mit welchem der Meißel selbst gehalten wird, aus einem ähnlichen Grundmaterial wie der Grundkörper des Meißels bestehen und in derselben Weise durch ein Plasma-Pulver-Auftragsschweißverfahren mit einer Verschleißschutzschicht überzogen ist, deren Zusammensetzung derjenigen der Verschleißschutzschicht des Grundkörpers des Meißels entspricht.

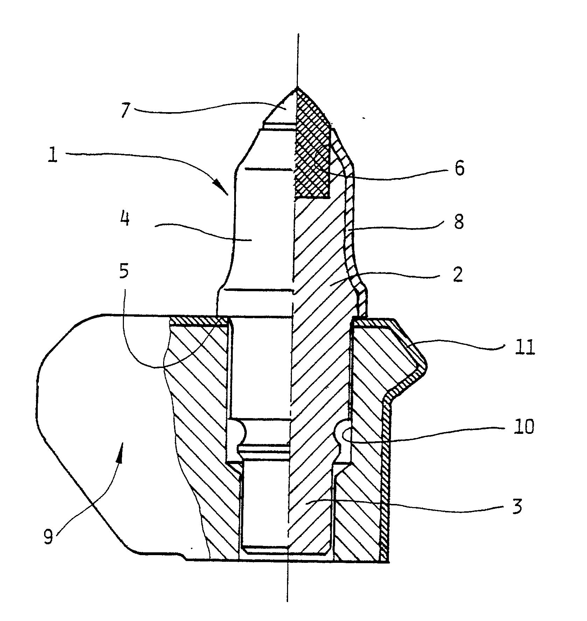

Ein Ausführungsbeispiel der Erfindung wird nachfolgend anhand der Zeichnung näher erläutert; die einige Figur zeigt einen Rundmeißel, teilweise im Schnitt, eingesetzt in einen ebenfalls teilweise geschnitten dargestellten Meißelhalter.

In der Zeichnung ist ein Rundmeißel 1 dargestellt, wie er beispielsweise im Tiefbau eingesetzt wird. Er umfaßt einen Grundkörper 2 aus mittellegiertem Stahl der ungefähren Zusammensetzung
0,1 bis 0,8 % Kohlenstoff
0,1 bis 10,0 % Chrom
0,1 bis 5,0 % Mangan, Vanadin, Wolfram und Silizium
(Rest übliche Eisenbegleiter wie Schwefel und Phosphor).

Der Grundkörper 2 läßt sich in einen geeignet profilierten Schaftbereich 3, welcher der Befestigung des Rundmeißels 1 dient, und in einen überstehenden Bereich 4 unterteilen; die Grenzlinie zwischen diesen beiden Bereichen 3, 4 wird durch eine Anschlagschulter 5 gebildet.

Am Ende des überstehenden Bereiches 4 ist der Grundkörper 2 des Rundmeißels 1 mit einer axialen Sackbohrung 6 versehen, in welche ein Hartstift 7 eingelötet ist. Beim letzteren handelt es sich um ein Sinterteil, welcher aus sehr feinkörnigem Wolframkarbid, Tantalkarbid oder ähnlichen Hartmaterialien besteht und u.U. mit einer dünnen künstlichen Diamantschicht überzogen sein kann.

Die Außenfläche des überstehenden Bereiches 4 des Grundkörpers 2 ist mit einer Verschleißschutzschicht 8 versehen. Diese wird durch ein Plasma-Pulver-Auftragsschweißverfahren aufgebracht. Dabei handelt es sich um eine Abwandlung des Plasma-Schweißverfahrens. Es wird mit einem nicht übertragenden Pilotlichtbogen, der zwischen Elektrode und Düse gezündet wird, sowie einem Hauptlichtbogen gearbeitet, der eingeschnürt zwischen Wolframelektrode und Werkstück brennt. Die Wolframelektrode befindet sich in einem Schutzgas, welches im Lichtbogen in einen Plasmastrahl hoher Temperatur umgewandelt wird, der mit hoher Geschwindigkeit aus der Düse austritt. Das Auftragmaterial wird in Pulverform durch ein gesondertes Pulverfördergas zugespeist.

Der Plasmastrahl schmilzt dieses Auftragmaterial auf und bringt es in feinster Tropfenform auf das Werkstück auf. Zwischen dem Grundwerkstoff des Werkstückes und der Auftragschicht entsteht eine mechanisch hochstabile Schweißverbindung, wobei jedoch die Wärmeeinbringung vergleichsweise gering und gut steuerbar ist.

Das Plasma-Pulver-Auftragsschweißverfahren (PPA) ist als solches bekannt und wird hauptsächlich in der Automobilindustrie zur Oberflächenhärtung von Ventilteilen eingesetzt. Es läßt sich auf Mehrstationentischen durchführen, wobei die unbeschichteten Grundkörper 2 aus einer Palette gegriffen, in eine drehbare Vorrichtung unter einem bestimmten Winkel eingegeben werden, um dann am nächsten Arbeitsplatz mittels Plasma-Pulver-Auftragsschweißung beschichtet und an der nächsten Arbeitsstation gezielt abgekühlt zu werden. An der wiederum nächsten Station findet dann die Entnahme statt. Das PPA-Verfahren bietet also den Vorteil leichter Mechanisierbarkeit der anfallenden großen Stückzahlen.

Die Verschleißschutzschicht 8 hat eine Dicke von etwa 3 bis 5 mm. Ihre Zusammensetzung ist wie folgt:
4,0 bis 8,0 % Kohlenstoff
5,0 bis 40,0 % Chrom
1,0 bis 30,0 % Vanadin, Niob und/oder Wolfram
0,1 bis 8,0 % Bor, Silizium, Mangan und/oder Nikkel
(Rest übliche Bestandteile).

Durch die verhältnismäßig geringe, auch lokal geielte Wärmeeinbringung, die mit dem PPA-Verfahren verbunden ist, läßt sich der Grundkörper 2 grundsätzlich bei bereits eingelötetem Hartstift 7 mit der Verschleißschutzschicht 8 versehen. Selbstverständlich ist es aber auch möglich, zunächst den Grundkörper 2 mit der Verschleißschutzschicht 8 zu überziehen und erst danach den Hartstift 7 einzulöten.

Die geringe, gut steuerbare Wärmeeinbringung beim PPA-Verfahren hat eine verhältnismäßig geringe Vermischung mit dem Material des Grundkörpers 2 zur Folge. Daher lassen sich schon in verhältnismäßig dünnen Schichten übereutektische Zusammensetzung mit der Ausbildung von Primärkarbiden als wesentlichen Trägern des Verschleißwiderstandes erzeugen. Andere Auftragschweißverfahren, beispielsweise unter Verwendung von Fülldrähten, könnten dieses Ergebnis erst bei mindestens der doppelten Schichtstärke erzielen.

In der Zeichnung ist außerdem - etwas schematiziert - der Meißelhalter 9 dargestellt, der eine entsprechend profilierte Aufnahmebohrung 10 für den Rundmeißel 1 besitzt. Der Meißelhalter 9 besteht im wesentlichen aus demselben mittellegierten Stahl, der auch für den Grundkörper 2 des Rundmeißels 1 verwendet wird. Die äußere Fläche des Meißelhalters 9 ist ebenfalls mit einer Verschleißschutzschicht 11 überzogen, deren Zusammensetzung der Verschleißschutzschicht 8 des Rundmeißels 1 entspricht und die ebenfalls nach dem PPA-Verfahren aufgebracht wurde.

**Ansprüche**

1. Meißel oder ähnliches Werkzeug für die Rohstoffgewinnung oder das Recycling mit einem Grundkörper aus mittellegiertem Stahl der ungefähren Zusammensetzung

0,1 bis 0,8 % Kohlenstoff
0,1 bis 10,0 % Chrom
0,1 bis 5,0 % Mangan, Vanadin, Wolfram, Silizium
(Rest übliche Eisenbegleiter wie Schwefel und Phosphor)
mit einer Verschleißschutzschicht aus verhältnismäßig hochlegiertem, hartem Material, mit einem Hartmetallstift aus gesintertem Wolfram- und/oder Tantalkarbid, der in einer Aufnahmeöffnung des Grundkörpers befestigt ist,
dadurch gekennzeichnet, daß
die Verschleißschutzschicht (8) eine im Wege des Plasma-Pulver-Auftragschweißverfahrens aus einem Werkstoff der ungefähren folgenden Zusammensetzung
4,0 bis 8,0 % Kohlenstoff
5,0 bis 40,0 % Chrom
1,0 bis 30,0 % Vanadin, Niob und/oder Wolfram
0,1 bis 8,0 % Bor, Silizium, Mangan und/oder Nikkel
(Rest übliche Bestandteile)
aufgebrachte Schicht ist.
2. Meißel nach Anspruch 1, dadurch gekennzeichnet, daß die Verschleißschutzschicht (8) eine Dicke zwischen 3 und 5 mm besitzt.
3. Meißelhalter zur Halterung eines Meißels nach Anspruch 1 oder 2 aus einem mittellegierten Stahl der ungefähren Zusammensetzung
0,1 bis 0,8 % Kohlenstoff
0,1 bis 10,0 % Chrom
0,1 bis 5,0 % Mangan, Vanadin, Wolram, Silizium
(Rest übliche Eisenbegleiter wie Schwefel und Phosphor)
mit einer Aufnahmeöffnung für den Meißel und mit einer Verschleißschutzschicht aus verhältnismäßig hochlegiertem, hartem Material,
dadurch gekennzeichnet, daß
die Verschleißschutzschicht (11) eine im Wege des Plasma-Pulver-Auftragschweißverfahrens aus einem Werkstoff der ungefähren folgenden Zusammensetzung
4,0 bis 8,0 % Kohlenstoff
5,0 bis 40,0 % Chrom
1,0 bis 30,0 % Vanadin, Niob und/oder Wolfram
0,1 bis 8,0 % Bor, Silizium, Mangan und/oder Nikkel
(Rest übliche Bestandteile)
aufgebrachte Schicht ist.